# EUROPÄISCHE PATENTSCHRIFT

(11) **EP 3 018 390 B1**
(45) Veröffentlichungstag und Bekanntmachung des Hinweises auf die Patenterteilung: **18.03.2020**
(21) Anmeldenummer: 15192565.8
(22) Anmeldetag: 02.11.2015
(51) Int. Cl.: F16K 31/00, F24H 9/16, E03B 7/07, G01M 3/04, F16K 31/26, F16K 31/56, F16K 17/38, F24H 9/20

(54) **WARMWASSERGERÄT UND SCHUTZEINRICHTUNG**
HOT WATER DEVICE AND PROTECTION DEVICE
CHAUFFE-EAU ET DISPOSITIF DE PROTECTION

(30) Priorität: 06.11.2014 DE 102014222732
(43) Veröffentlichungstag der Anmeldung: 11.05.2016
(73) Patentinhaber: Robert Bosch GmbH, 70442 Stuttgart (DE)
(72) Erfinder: Arsenyev, Anton, 82110 Germing (DE); Bauer, Franz, 83374 Traunwalchen (DE); Englisch, Christian, 83324 Ruhpolding (DE); Radl, Mathias, 83374 Oderberg (DE); Gruber, Michael, 83362 Surberg (DE); Hörner, Wolfgang, 83278 Traunstein (DE); Mayer, Gebhard, 83278 Traunstein (DE)
(74) Vertreter: Bee, Joachim

(56) Entgegenhaltungen:
- WO-A1-2014/175691
- US-A- 3 920 031
- US-A- 4 909 274
- US-A- 4 944 253
- US-B1- 6 253 785
- US-B1- 7 562 673
- US-B1- 8 464 744

## Beschreibung

Die Erfindung betrifft ein Warmwassergerät, insbesondere für den häuslichen Bereich, nach dem Oberbegriff des Patentanspruchs 1, mit einem Leitungssystem, das einen Kaltwasserzulauf zum Zuführen von Kaltwasser, einen Warmwasserauslauf zur Entnahme von Warmwasser, und einen zwischen dem Kaltwasserzulauf und dem Warmwasserauslauf fluidtechnisch angeordneten Heizblock zum Erwärmen des Kaltwassers hat, und eine Schutzeinrichtung zum Verhindern eines Wasseraustritts bei einer Leckage eines Warmwassergeräts.

Bei Warmwassergeräten wie Durchlauferhitzern in Blankdrahttechnik mit einem kunststoffbasierten Heizblock kann es bspw. Aufgrund eines Platzens des Heizblocks zu Wasserschäden kommen. Um einen Wasserschaden zu verhindern, sind bei Großgeräten wie Spülmaschinen und Waschmaschinen sogenannte aquaStops weit verbreitet sind. Während in der Spülmaschine oder in der Waschmaschine Wasser drucklos und für die kurze Zeit beim Zapfen für Spülen oder Vor-/Hauptwäsche zugeleitet wird, läuft Wasser durch ein Warmwassergerät dauerhaft und ständig unter Druck. Daher sind an die Schutzeinrichtungen für Warmwassergeräte besondere Anforderungen zu stellen, um ein zuverlässiges Absperren eines Wasserzulaufs zu verhindern.

Aus der DE4028423A1 ist eine Einrichtung mit Dampfsperre bekannt, die entweder auf Wassergewicht bzw. einen Druck im Schlauch reagiert oder auf Wasser in einer Bodenwanne des Haushaltsgerätes. Diese Einrichtung erfordert jedoch eine hohe Wassersäule zum Auslösen. In der DE19650861A1, EP0517293B1, US007421784B2, US003473553, US006024116A und der US2010/0126235 sind elektrische Schutzeinrichtung für gezeigt. Die WO2012/140598A2, WO2012/140595A2, US005713387A und EP2120032A2 beschreiben mechanische Schutzeinrichtungen für Haushaltsgeräte, sind jedoch nur bedingt geeignet, da nur ein Zuleitungsschlauch geschützt ist. Aus der DE102010038580B3 ist eine elektro-hydraulische Schutzeinrichtung bekannt. Aus den Druckschriften US 7 562 673 B1 und US 3 920 031 A ist jeweils ein Durchflussabschaltungssystem bekannt. Die US 8 464 744 B1 offenbart einen Wassersensor mit Aktivierungsmechanismus und die WO 2014/175691 A1 einen Leckagedetektor. In der US 4 909 274 A ist eine Ventileinrichtung offenbart, und die US 6 253 785 B1 zeigt eine automatische Leckage-Abschaltungsvorrichtung. Weiterer Stand der Technik ist in der US006792967B1, US007082959B1, US007424896B1, DE392311A1, US008006714B1, US004294276, US002798503 und WO01/01042A1 gezeigt.

Aufgabe der Erfindung ist es, ein Warmwassergerät, insbesondere für den häuslichen Gebrauch, zu schaffen, das zuverlässig gegen einen Wasserschaden geschützt ist bzw. bei dem bei einer Leckage zwischen einem Kaltwasserzulauf und einem Warmwasserauslauf ein zuverlässiges und schnelles Absperren einer Wasserzufuhr erfolgt. Des Weiteren ist es Aufgabe der Erfindung, einen Schutzeinrichtung für ein derartiges Warnwassergerät zu schaffen.

Diese Aufgabe wird gelöst durch ein Warmwassergerät mit den Merkmalen des Patentanspruch 1 und durch eine Schutzeinrichtung mit den Merkmalen des Patentanspruchs 12.

Ein erfindungsgemäßes Warmwassergerät, insbesondere für den häuslichen Bereich, hat ein Leitungssystem mit einem Kaltwasserzulauf zum Zuführen von Kaltwasser, einem Warmwasserauslauf zur Entnahme von Warmwasser, und mit einem zwischen dem Kaltwasserzulauf und dem Warmwasserauslauf fluidtechnisch angeordneten Heizblock zum Erwärmen des Kaltwassers. Erfindungsgemäß hat das Warmwassergerät eine Schutzeinrichtung zum Absperren des Kaltwasserzulaufs bei einer Leckage des Leitungssystems, wobei die Schutzeinrichtung stromlos ist und Leckagewasser einen Schließvorgang zum selbsttätigen Absperren des Kaltwasserzulaufs initiiert bzw. einleitet.

Das erfindungsgemäße Warmwassergerät ist aufgrund der Schutzeinrichtung zuverlässig im unbewachten und ausgeschalteten Zustand bzw. Ruhezustand automatisch gegen einen Wasseraustritt aus einem beschädigten wasserführenden Geräteabschnitt geschützt, unabhängig davon, ob das Gerät bestromt ist oder nicht. Es kann maximal das Wasser austreten, das sich zum Zeitpunkt des Auslösens der Schutzeinrichtung in dem beschädigten Geräteabschnitt befand.

Eine Leckagewassermenge zum Initiieren bzw. Auslösen, kann eingestellt werden. Hierdurch ist es möglich, die Schutzeinrichtung gegenüber Einflüssen von sich am Wasserwassergerät bildenden Kondenswasser resistent zu machen.

Bevorzugterweise hat die Schutzeinrichtung ein Absperrventil zum automatischen Absperren des Kaltwasserzulaufs, eine Leckagewasserleiteinrichtung und eine ventilauslösende Einrichtung. Die Schutzeinrichtung weist somit verhältnismäßig wenig Bauteile auf, wodurch sie relativ störungsfrei, wartungsarm, einfach zu installieren und kostengünstig ist. Insbesondere können die Bauteile einzeln in Abhängigkeit von dem jeweiligen Warmwassergerät aufeinander abgestimmt und ausgetauscht werden.

Bei einem Ausführungsbeispiel hat die ventilauslösende Einrichtung einen Schwimmer in einer Schwimmerkammer, der beim Eindringen von Leckagewasser. aufschwimmt und die mit einer Mechanik zum Freigeben eines Schließelements zusammenwirkt. Durch diese Maßnahme wird die einleitende Kraft zum Einleiten des Absperrvorgangs von dem Leckagewasser selbst aufgebracht.

Bevorzugterweise ist der Schwimmkörper über ein Federelement in seine Ruhestellung vorgespannt. Hierdurch wird ein versehentliches Anheben des Schwimmers in Folge von beispielsweise Stößen verhindert.

Das Schließelement kann in seine Schließstellung vorgespannt sein und die Mechanik kann einen in seine Freigabestellung vorgespannten Sperrbolzen zum Halten des Schließelements in seiner Öffnungsstellung und einen Hebel aufweise, der beim Aufschwimmen des Schwimmers den Sperrbolzen freigibt. Durch diese Maßnahme erfolgt eine rein mechanische Betätigung des Schließelements. Zudem wirkt die Mechanik als Über- bzw. Untersetzung zwischen einer Auftriebskraft des Schwimmers und einer Rückstellkraft einer Sperrbolzenfeder, so dass ein Ansprechverhalten der Schutzeinrichtung bzw. des Schließelements genau eingestellt werden kann.

Um zu verhindern, dass Feststoffe in die Schwimmerkammer eintreten, die zu einem Verklemmen des Schwimmers führen könnten, hat die ventilauslösende Einrichtung stromaufwärts der Schwimmerkammer eine Trennkammer zum Reinigen des Leckagewassers von Festkörpern.

Bei einem anderen Ausführungsbeispiel hat die ventilauslösende Einrichtung ein Dehnstoffelement, das sich bei Kontakt mit dem Leckagewasser in Richtung eines Schließelements ausdehnt und hierbei dieses aus seiner Öffnungsstellung in seine Schließstellung überführt. Das Dehnstoffelement ist beispielsweise ein wasseraufsaugender Körper wie ein Schwamm. Bei diesem Ausführungsbeispiel wird die einleitende Kraft zum Einleiten des Absperrvorgangs ebenfalls von dem Leckagewasser selbst aufgebracht. Dieses Ausführungsbeispiel erfordert weniger Bauteile als das Ausführungsbeispiel mit dem Schwimmer, da das Dehnstoffelement selbst beim Aufquellen eine auf das Schließelement wirkende Schließkraft erzeugt.

Um eine Fehlauslösung aufgrund von Luftfeuchte zu verhindern, ist das Dehnstoffelement in einem zur Außenumgebung abgedichteten Aufnahmeraum aufgenommen, der mit der Leckagewasserleiteinrichtung über eine Öffnung in Fluidverbindung steht, in der eine Dampfsperre angeordnet ist. Ein Schutz des Dehnstoffelements vor der Luftfeuchte ist besonders dann wichtig, wenn die Schutzeinrichtung in dem Warmwassergerätzulaufbereich positioniert wird. Wasser kondensiert sich gerade in diesem Bereich wegen niedrigen Temperaturen aus der Luft besonders stark. Zur effektiveren Vermeidung von Fehlauslösungen schützt die Dampfsperre das Dehnstoffelement von der Feuchte aus der Luft und lässt das Dehnstoffelement im Falle des Lecks auslösen.

Erfindungsgemäß ist die Leckagewasserleiteinrichtung eine Auffangwange zum Auffangen von sämtlichen Leckagewassers, die sich in Einbaulage zumindest seitlich über den Heißblock hinauserstreckt und die eine Senke zum Leiten des Leckagewassers zur ventilauslösenden Einrichtung hat. Hierdurch wird eine generelle Abgabe von Leckagewasser an die Außenumgebung verhindert. Selbst bei einer Leckage wird somit das Wasser in dem Warmwassergerät gehalten und nicht an die Außenumgebung abgegeben.

Um eine Verunreinigung des Leitungssystems per se zu vermeiden und um zu vermeiden, dass sich Schmutzpartikel am Ventilsitz des Schließelements ablagern, kann ein Sieb zum Rückhalten von Feststoffen im Kaltwasser zwischen einem Absperrhahn und dem Absperrventil und somit unmittelbar vor dem Absperrventil angeordnet sein.

Die Schutzeinrichtung kann eine Transportsicherung haben. Durch die Transportsicherung wird ein versehentliches Auslösen des Absperrventils, beispielsweise in Folge von Transportbelastungen, Installationsarbeiten und dergleichen, verhindert. Diese Transportsicherung hat zum Ziel, erst nach Anfang des Betriebs des Warmwassergerätes die Sicherheitseinrichtung Betriebs bereit zu machen. Die Transportsicherung reagiert bevorzugterweise auf Leckagewasser in dem Warmwassergerät und schaltet dann die Schutzeinrichtung in den aktiven Zustand. Bei einer Variante wird Wasser aus dem Wassersystem des Wassergeräts benutzt. Bei einer anderen beispielhaften Variante wird Wasser außerhalb des Wassersystems des Warnwassergerätes benutzt, entweder Wasser nach dem Warmwasserauslauf oder vor dem Kaltwasserzulauf, oder Wasser, das durch die Leckage hindurchtritt. Als mögliche Transportsicherung kann eine wasserlösliche Folie dienen, die das Dehnstoffelement in der Schutzeinrichtung so verriegelt, dass nur nach dem Lösen der Folie das Dehnstoffelement die Möglichkeit zum Ausdehnen bekommt.

Eine erfindungsgemäße Schutzeinrichtung für ein Warmwassergerät, insbesondere im häuslichen Gebrauch, zum Absperren eines Kaltwasserzulaufs bei einer Leckage eines Leitungssystems des Warmwassergeräts funktioniert stromlos und ist derart konstruiert, dass Leckagewasser einen Schließvorgang zum selbsttätigen Absperren des Kaltwasserzulaufs initiiert. Bei der erfindungsgemäßen Schutzeinrichtung handelt es sich um eine selbsttätige, mechanische Sicherheitsvorrichtung, die auf das aus dem Warmwassergerät austretende Wasser reagiert und mechanisch ein Absperrventil im Falle einer Leckage im Warmwassergerät betätigt. Die Schutzeinrichtung bietet Schutz vor Wasserschäden bei Platzen des Heizblocks wegen Frost oder Transportschaden und braucht keinen doppelten Schlauch zum Abfangen des Wasser aus den inneren Schlauch und keine Stromversorger für das Auslösen. Insbesondere ist die Schutzeinrichtung in bestehende Warmwassergeräte nachrüstbar.

Die Erfindung eignet sich insbesondere in Verbindung eines Durchlauferhitzers oder eines Warmwasserspeichers im häuslichen Bereich, bei dem im unbewachten und ausgeschalteten Zustand bzw. Ruhezustand des Warmwassergerätes wirkungsvoll und automatisch ein möglicher Wasseraustritt aus dem wasserführenden Geräteabschnitt verhindert werden soll, unabhängig davon, ob das Gerät bestromt ist oder nicht.

Sonstige Ausführungsbeispiele sind Gegenstand weiterer Unteransprüche.

Im Folgenden werden bevorzugte Ausführungsbeispiele der Erfindung anhand schematischer Darstellungen näher erläutert. Es zweigen:
Figur 1 einen schematischen Aufbau eines ersten Ausführungsbeispiels eines erfindungsgemäßen Warmwassergeräts mit einer Schutzeinrichtung in Öffnungsstellung,
Figur 2 das Warmwassergerät aus Figur 2 mit der Schutzeinrichtung in Schließstellung,
Figur 3 einen schematischen Aufbau eines zweiten Ausführungsbeispiels eines erfindungsgemäßen Warmwassergeräts mit einer Schutzeinrichtung in Öffnungsstellung, und
Figur 4 das Warmwassergerät aus Figur 3 mit der Schutzeinrichtung in Schließstellung,

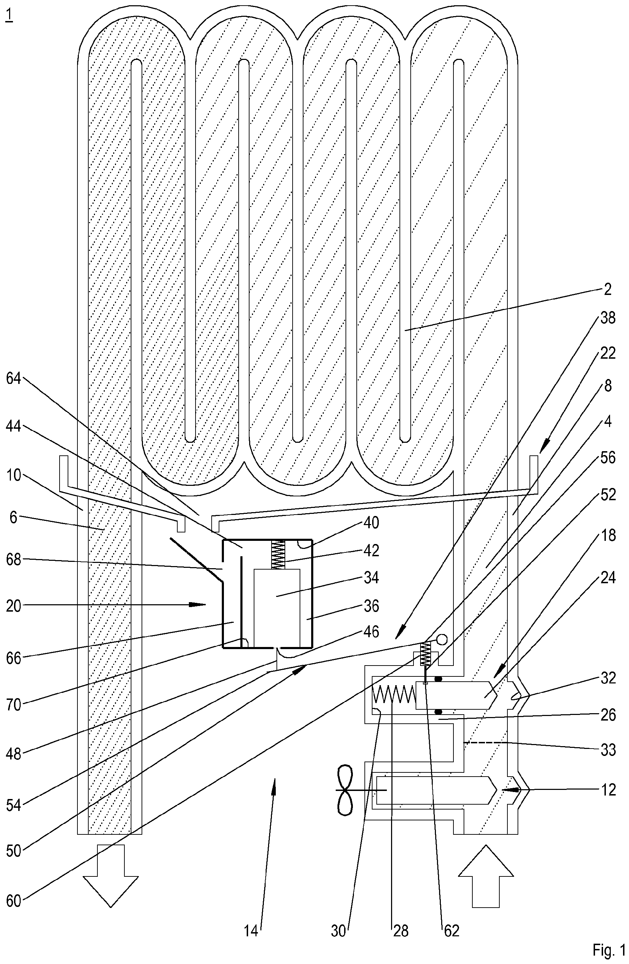

Fig.1 zeigt einen Aufbau eines ersten Ausführungsbeispiels eines erfindungsgemäßen Warmwassergeräts 1 wie einen Durchlauferhitzer für den häuslichen Bereich zum Erwärmen von Wasser, der druckfest und vorzugsweise in Blankdrahttechnik ausgeführt ist. Das Warmwassergerät 1 hat einen Heizblock 2 zum Erwärmen von Kaltwasser 4 bzw. zum Erzeugen von Warmwasser 6, dem über ein Kaltwasserzulauf 8 das Kaltwasser 4 zugeführt und über einen Warmwasserauslauf 10 das Warmwasser 6 entnommen wird. Der Kaltwasserzulauf 8, der Heizblock 2 und der Warmwasserablauf 10 bilden ein wasserführendes Leitungssystem bzw. einen wasserführenden Geräteabschnitt des Warmwassergeräts 1.

Eingangsseitig des Leitungssystems bzw. stromaufwärts des Heizblocks 2 ist im Kaltwasserzulauf 8 ein Absperrhahn 12 zum manuellen Aufsperren des Kaltwasserzulaufs 8 nach der Installation des Warmwassergeräts 1 angeordnet. Ausgangsseitig des Leitungssystems bzw. stromabwärts des Heizblocks 2 ist eine nicht gezeigte Heizwasserarmatur zum Auf- und Zusteuern des Warmwasserauslaufs 10 und somit zur Entnahme des Warmwassers 6 angeordnet.

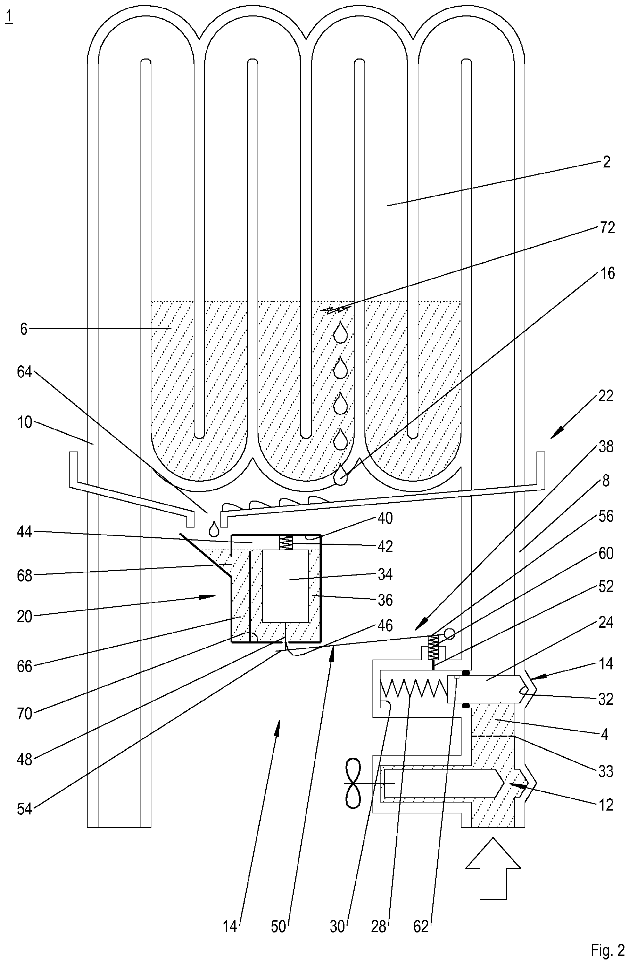

Erfindungsgemäß weißt das Warmwassergerät 1 eine Schutzeinrichtung 14 auf, mittels der verhindert wird, dass insbesondere im unbewachten und ausgeschalteten Zustand und bei beschädigtem Leitungssystem Leckagewasser 16 (siehe Figur 2) aus dem Warmwassergerät 1 austritt

Die Schutzeinrichtung 14 ist in dem Warmwassergerät 1 unterhalb des Heizblockes 2 angeordnet. Es hat ein Absperrventil 18, eine ventilauslösende Einrichtung 20 und eine Leckagewasserleiteinrichtung 22.

Das Absperrventil 18 ist stromabwärts des Absperrhahns 12 kaltwasserzulaufseitig angeordnet. Es hat einen als Schließelement 24 ausgebildeten Schließkolben, der axial verschiebbar in einem Ventilgehäuse 26 geführt ist, das zum Kaltwasserzulauf 8 geöffnet ist. Eine Ventilfeder 28 stützt sich an einem Federraumboden30 ab und spannt den Schließkolben 24 in seine Schließstellung und somit in Richtung seines Ventilsitzes 32 vor. Um eine Ablagerung von Verunreinigungen an dem Ventilsitz 32 zu verhindern, ist zwischen dem Absperrhahn 12 und dem Absperrventil 18 ein Sieb 33 in den Kaltwasserzulauf eingebracht.

Die ventilauslösende Einrichtung 20 hat im Wesentlichen einen Schwimmer 34 eine den Schwimmer 34 aufnehmende Schwimmerkammer 36 und eine Mechanik 38 zum Freigeben des Schließkolbens 24.

Der Schwimmer 34 ist hier ein kastenförmiger schwimmfähiger Körper, der über eine zwischen ihm und einer Deckenfläche 40 angreifenden Feder 42 in seine Ruhstellung vorgespannt ist. In der Ruhestellung liegt er bodenseitig in der Schwimmerkammer 36 auf.

Die Schwimmerkammer 36 hat einen oberen bzw. deckenflächennahen Einlass 44 zum Einleiten des Leckagewassers 16 und einen bodenseitigen abgedichteten Durchlass 46 zum Durchführen einer Verriegelungsstange 48 der Mechanik. Der Durchlass 46 ist gegen einen Austritt des in die Schwimmerkammer 36 eintretenden Leckagewassers 16 abgedichtet

Die Mechanik 38 hat neben der Verriegelungsstange 48 einen Hebel 50 bzw. Schwenkhebel und einen vorgespannten Sperrbolzen 52. Die Verriegelungsstange 48 ist zwischen dem Schwimmer 34 und einem ersten Abschnitt 54 des Hebels 50 entfernt von dessen Schwenkachse eingeklemmt. Bei einer Auftriebsbewegung des Schwimmers 34 kann er eine korrespondierende Aufwärtsbewegung ausführen, was eine Verschwenkung des Hebels 50 um eine nicht gezeigte Schwenkachse ermöglicht. Der Sperrbolzen 52 ist in einer Gehäusebohrung des Absperrventils 18 geführt und zwischen einem zweiten Abschnitte 58 des Hebels 50 nahe der Schwenkachse angeordnet. Er ist in seine Freigabeposition über eine Bolzenfeder 60 vorgespannt. In seiner Sperrstellung greift er in eine Vertiefung 62 des Schließkolbens 24 ein und sichert diesen in seiner Öffnungsstellung.

Die Auftriebskraft bei dem Schwimmer 34 ist in dem Vergleich mit einer Druckkraft der Bolzenfeder 60 deutlich kleiner. Der Hebel 50 dient zur Übersetzung der Druckkraft der Bolzenfeder 60 auf die Auftriebskraft des Schwimmers 34. Durch die Hebelwirkung wird das Drehmoment der Bolzenfeder 60 mit kleiner Wirklänge dem Drehmoment des Schwimmers 34 mit großer Wirklänge gleich gestellt. Bei umgekehrten Hebelverhältnis erfolgt eine Untersetzung.

Die Leckagewasserleiteinrichtung 22 ist hier als eine Auffangwanne zum Auffangen des sämtlichen Leckagewassers dargestellt. Sie ist unterhalb des Heizblockes 2 angeordnet und erstreckt sich seitlich über diesen hinaus. Sie ist trichterförmig und hat somit eine Senke 64 zum Sammeln und Leiten des Leckagewassers 16 zur ventilauslösenden Einrichtung 20 und insbesondere hier zu einer Trennkammer 66 der ventilauslösenden Einrichtung 20.

Die Trennkammer 66 dient zum Abtrennen von Feststoffen aus dem Leckagewasser 16 und ist der Schwimmerkammer 36 vorgelagert. Somit tritt das Leckagewasser 16 gereinigt über die Trennkammer 66 in die Schwimmerkammer 36 ein. Bevorzugterweise erfolgt ein Zulauf 68 des Leckagewassers 16 in die Trennkammer 66 etwas unterhalb der Schwimmerkammereinlasses 44.

In dem in Figur 1 gezeigten Normalbetrieb des Warmwassergeräts 1 ist das Leitungssystem unbeschädigt. Die Schwimmerkammer 36 ist frei von Leckagewasser 16 und der Schwimmkörper 34 wird über die Druckfeder 42 in seine Ruhestellung vorgespannt, in der er am Boden 70 der Schwimmerkammer 36 aufliegt. Die Verriegelungsstange 48 ist maximal ausgefahren und der Hebel 50 befindet sich in seiner Verriegelungsstellung, in der der Sperrbolzen 52 in seiner Sperrstellung fixiert ist. Der Sperrbolzen 52 greift formschlüssig in die Vertiefung des Schließkolbens 24 ein und hält diesen in seiner Öffnungsstellung. Der Kaltwasserzulauf 8 ist aufgesteuert.

In dem in Figur 2 gezeigten Störbetrieb hat sich eine Leckage im Heizblock 2 gebildet. Über einen beschädigten Wandungsabschnitt 72des Heizkörpers 2 tritt das Leckagewasser 16 aus dem Heizblock 2 aus. Das Leckagewasser 16 wird durch die Auffangwanne 22 aufgefangen und zum Zulauf 68 der Trennkammer 66 geführt. Die Tennkammer 66 füllt sich, bis das von Feststoffen gereinigte Leckagewasser 16 über den Einlass 44 in die Schwimmerkammer 36 eintritt. Das Leckagewasser 16 sammelt sich in der Schwimmerkammer 36 und erzeugt ab einer bestimmten Menge eine auf den Schwimmer 34 wirkende Auftriebskraft. Sobald die Federkraft der den Schwimmer 34 in seiner Ruhestellung haltenden Druckfeder 42 überwunden ist, schwimmt der Schwimmer 34 auf. Der Hebel 50 ist entriegelt und verschwenkbar. Der Sperrbolzen 52 wird nun mittels der Bolzenfeder 60 in seine Freigabeposition überführt. Der Formschluss zwischen dem Sperrbolzen 52 und mit Schließkolben 24 wird aufgehoben. Als Folge wird der Schließkolben 24 über die Ventilfeder 28 in seine Schließstellung überführt, in der er dichtend an dem Ventilsitz 32 anliegt und der Kaltwasserzulauf 8 abgesperrt ist. Das Warmwassergerät 1 ist somit vom hausseitigen Wassernetz abgeklemmt und Kaltwasser 4 kann in den Heizblock 2 nicht mehr nachfließen. Der Heizblock 2 läuft nun oberhalb des beschädigten Wandungsabschnitts 72 leer, wobei das austretende Leckagewasser 16 in der Auffangwanne 22 vollständig aufgefangen wird.

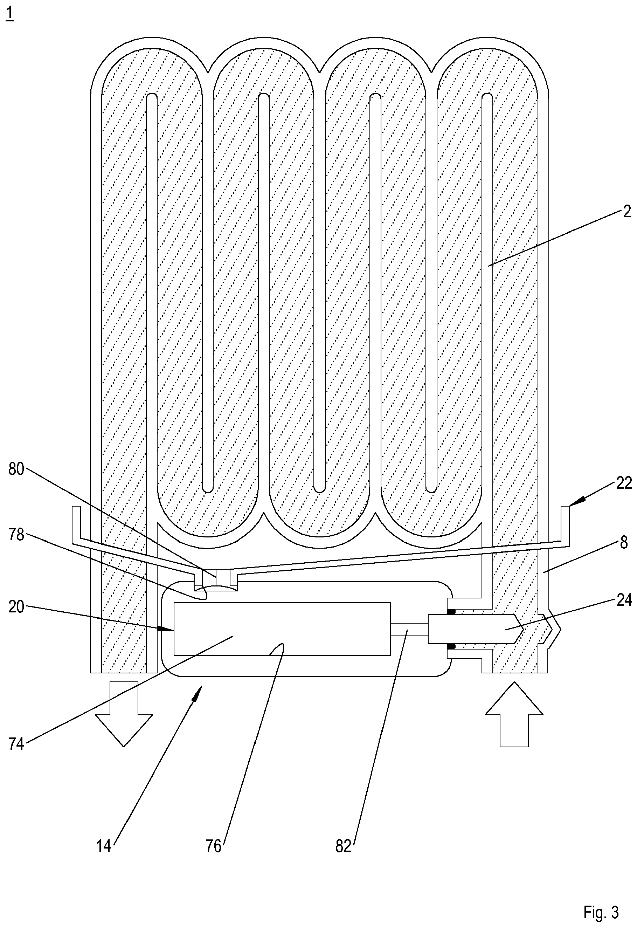

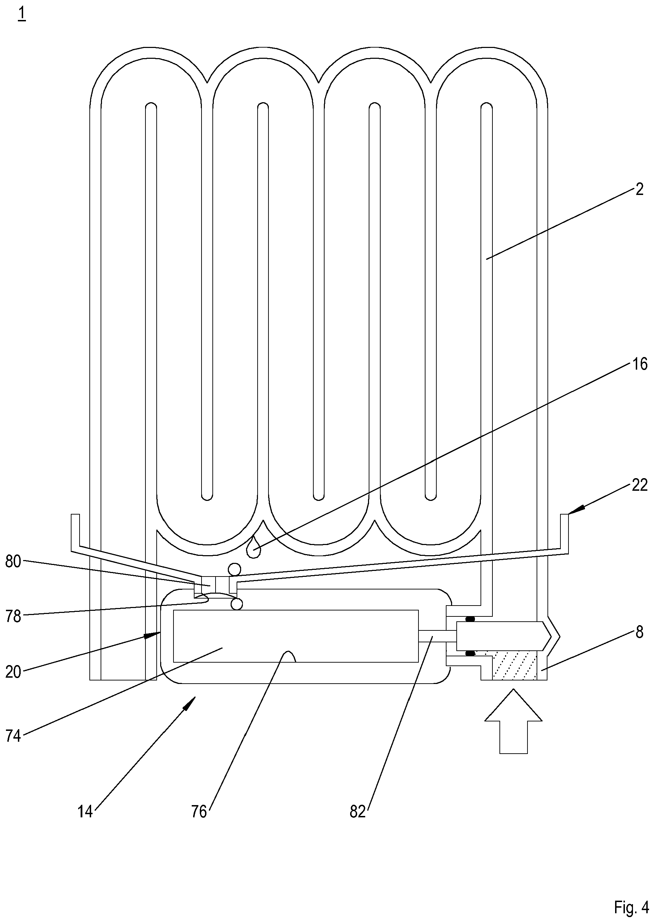

In den Figuren 3 und 4 ist ein zweites Ausführungsbeispiels des erfindungsgemäßen Warmwassergeräts 1 gezeigt. Dieses ist hier ebenfalls ein Durchlauferhitzer für den häuslichen Bereich und eine integrierte und unterhalb eines Heizblocks 2 angeordnete stromlose, mechanische Schutzeinrichtung 14 zum selbsttätigen Absperren eines Kaltwasserzulaufs 8 bei einer Leckage beispielsweise im Heizblock 2. Über eine Leckagewasserleiteinrichtung 22 wie eine trichterförmige Auffangwanne wird aus dem wasserführenden Leitungssystem austretendes Leckagewasser 16 aufgefangen und einer ventilauslösenden Einrichtung 20 zum Initiieren eines Schließvorgangs eines Kaltwasserzulaufs 8 zugeführt.

Im Unterschied zum ersten Ausführungsbeispiel ist beim zweiten Ausführungsbeispiel ein Dehnstoffelement 74 vorgesehen, das sich bei Kontakt mit dem Leckagewasser 16 in Richtung eines Schließelements 24 ausdehnt und hierbei dieses aus seiner in Figur 3 gezeigten Öffnungsstellung, in der der Kaltwasserzulauf 8 aufgesteuert ist, in seine in Figur 4 gezeigten Schließstellung überführt, in der der Kaltwasserzulauf 8 zugesteuert ist.

Das Dehnstoffelement 74 ist beispielweise ein Wasser aufnehmender Schwamm und in einem zur Außenumgebung abgedichteten Aufnahmeraum 76, der mit der Auffangwanne 22 über eine Öffnung 78 in Fluidverbindung steht, in der hier eine Dampfsperre 80 angeordnet ist.

Das Schließelement 24 ist ein axial verschiebbarer Schließkolben, an dem rückseitig eine Schubstange 82 angreift, der sich von dem Dehnstoffelement 74 erstreckt. Der Schließkolben 24 ist über die Schubstange 80 fest mit dem Dehnstoffelement 74 verbunden. Er überträgt eine Aufquellbewegung des Dehnstoffelements 74 in eine axiale Bewegung des Schließkolbens 24 aus seiner Öffnungsstellung in seine Schließstellung. Aufgrund der festen Verbindung des Schließkolbens 24 mit Dehnstoffelement 74 mittelbar über den Stößel 82 ist der Schließkolben 24 sowohl in seiner Öffnungsstellung, als auch in seiner Schließstellung lagegesichert, so dass Federn als Vorspannelemente oder Sperrbolzen nicht notwendig sind.

Die Dampfsperre 80 besteht beispielsweise aus einem nicht gezeigten Schwimmer, der mit zwei ebenfalls nicht gezeigtenRückschlagventilen fest verbunden ist. Die Rückschlagventile machen in der Schließposition das Dehnstoffelement 74 luftdicht, somit können das Leckagewasser 16 und feuchte Luft nicht zu dem Dehnstoffelement 74 eindringen. Im Falle einer Leckagewasserzufuhr aus der Auffangwanne 22 taucht der Schwimmer auf und öffnet dabei die beiden Rückschlagventile. In diesem Fall gelangt das Leckagewasser 16 über das obere breitere Rückschlagventil zu dem Dehnstoffelement 74 und Luft strömt über das untere schmalere Rückschlagventil ein, damit der Druckausgleich stattfinden kann. In dem Fall, dass Kondenswasser in den Aufnahmeraum 76 des Dehnstoffelements 74 eindringt, fließt dieses Kondenswasser sofort zur Dampfsperre 80 ab. Durch Kondenswasserzufuhr von unten zu dem Schwimmer taucht der Schwimmer auf und öffnet die beiden Rückschlagventile. Somit kann Kondenswasser über das untere schmalere Rückschlagventil ausfließen und Luft für Druckausgleich kann über das obere breitere Rückschlagventil in den Aufnahmeraum 80 einströmen

Offenbart ist ein Warmwassergerät, insbesondere für den häuslichen Bereich, mit einem Leitungssystem, das einen Kaltwasserzulauf zum Zuführen von Kaltwasser, einen Warmwasserauslauf zur Entnahme von Warmwasser, und einen zwischen dem Kaltwasserzulauf und dem Warmwasserauslauf fluidtechnisch angeordneten Heizblock zum Erwärmen des Kaltwassers hat, wobei eine Schutzeinrichtung zum Absperren des Kaltwasserzulaufs bei einer Leckage des Leitungssystems, wobei die Schutzeinrichtung stromlos ist und Leckagewasser einen Schließvorgang zum selbsttätigen Absperren des Kaltwasserzulaufs initiiert, und eine Schutzeinrichtung für ein Warmwassergerät zum Absperren eines Kaltwasserzulaufs bei einer Leckage eines Leitungssystems des Warmwassergerät.

### Bezugszeichenliste

- 1: Warmwassergerät
- 2: Heizblock
- 4: Kaltwasser
- 6: Warmwasser
- 8: Kaltwasserzulauf
- 10: Warmwasserzulauf
- 12: Absperrhahn
- 14: Schutzeinrichtung
- 16: Leckagewasser
- 18: Absperrventi
- 20: ventilauslösende Einrichtung
- 22: Leckagewasserleiteinrichtung / Auffangwanne
- 24: Schließelement / Schließkolben
- 26: Ventilgehäuse
- 28: Ventilfeder
- 30: Federraumboden
- 32: Ventilsitz
- 33: Sieb
- 34: Schwimmer
- 36: Schwimmerkammer
- 38: Mechanik
- 40: Deckenfläche
- 42: Druckfeder
- 44: Einlass
- 46: Durchlass
- 48: Verriegelungsstange
- 50: Hebel
- 52: Sperrbolzen
- 54: Abschnitt
- 58: Abschnitt
- 60: Bolzenfeder
- 62: Vertiefung
- 64: Senke
- 66: Trennkammer
- 68: Zulauf
- 70: Boden
- 72: Wandnungsabschnitt
- 74: Dehnstoffelement
- 76: Aufnahmeraum
- 78: Öffnung
- 80: Dampfsperre
- 82: Schubstange

## Patentansprüche

1. Warmwassergerät (1), insbesondere für den häuslichen Bereich, mit einem Leitungssystem, das einen Kaltwasserzulauf (8) zum Zuführen von Kaltwasser, einen Warmwasserauslauf (10) zur Entnahme von Warmwasser, und einen zwischen dem Kaltwasserzulauf (8) und dem Warmwasserauslauf fluidtechnisch angeordneten Heizblock (2) zum Erwärmen des Kaltwassers hat, wobei das Warmwassergerät eine Schutzeinrichtung (14) zum Absperren des Kaltwasserzulaufs (8) bei einer Leckage des Leitungssystems umfasst, wobei die Schutzeinrichtung (14) stromlos ist und Leckagewasser einen Schließvorgang zum selbsttätigen Absperren des Kaltwasserzulaufs (8) initiiert, **dadurch gekennzeichnet, dass** die Schutzeinrichtung (14) eine Leckagewasserleiteinrichtung (22) aufweist, die eine Auffangwanne zum Auffangen sämtlichen Leckagewassers (16) ist, die sich in Einbaulage zumindest seitlich über den Heizblock (2) hinauserstreckt und die eine Senke (64) zum Leiten des Leckagewassers (16) zu einer ventilauslösenden Einrichtung (20) hat.

2. Warmwassergerät nach Patentanspruch 1, wobei eine Leckagewassermenge zum Initiieren einstellbar ist.

3. Warmwassergerät nach Patentanspruch 1 oder 2, wobei die Schutzeinrichtung (14) ein Absperrventil (18) und die ventilauslösende Einrichtung (20) hat.

4. Warmwassergerät nach Patentanspruch 3, wobei die ventilauslösende Einrichtung (20) einen Schwimmer (34) in einer Schwimmerkammer (36) umfasst, der beim Eindringen von Leckagewasser (16) aufschwimmt und die mit einer Mechanik (38) zum Freigeben eines Schließelements (24) zusammenwirkt.

5. Warmwassergerät nach Patentanspruch 4, wobei der Schwimmkörper (34) über ein Federelement (42) in seine Ruhestellung vorgespannt ist.

6. Warmwassergerät nach Patentanspruch 4 oder 5, wobei das Schließelement (24) in seine Schließstellung vorgespannt ist und die Mechanik (38) einen in seine Freigabestellung vorgespannten Sperrbolzen (52) zum Halten des Schließelements (24) in seiner Öffnungsstellung und einen Hebel umfasst, der beim Aufschwimmen des Schwimmers (34) den Sperrbolzen (52) freigibt.

7. Warmwassergerät nach Patentanspruch 4, 5 oder 6, wobei die ventilauslösende Einrichtung (20) stromaufwärts der Schwimmerkammer (36) eine Trennkammer (66)zum Reinigen des Leckagewassers (16) von Festkörpern hat.

8. Warmwassergerät nach Patentanspruch 3, wobei die ventilauslösende Einrichtung (20) ein Dehnstoffelement (74) aufweist, das sich bei Kontakt mit dem Leckagewasser (16) in Richtung eines Schließelements (24) ausdehnt und hierbei dieses aus seiner Öffnungsstellung in seine Schließstellung überführt.

9. Warmwassergerät nach Patentanspruch 8, wobei das Dehnstoffelement (74) in einem zur Außenumgebung abgedichteten Aufnahmeraum (76) aufgenommen ist, der mit der Leckagewasserleiteinrichtung (22) über eine Öffnung in Fluidverbindung steht, in der eine Dampfsperre (80) angeordnet ist.

10. Warmwassergerät nach einem der vorhergehenden Patentansprüche, wobei ein Sieb zum Rückhalten von Feststoffen im Kaltwasser zwischen einem Absperrhahn (12) und dem Absperrventil (18) angeordnet ist.

11. Warmwassergerät nach einem der vorhergehenden Patentansprüche, wobei die Schutzeinrichtung (14) eine Transportsicherung aufweist.

12. Schutzeinrichtung (14) für ein Warmwassergerät nach den vorhergehenden Patentansprüchen, das ein Leitungssystem mit einem Kaltwasserzulauf (8) zum Zuführen von Kaltwasser, einem Warmwasserauslauf (10) zur Entnahme von Warmwasser, und einem zwischen dem Kaltwasserzulauf (8) und dem Warmwasserauslauf fluidtechnisch angeordneten Heizblock (2) zum Erwärmen des Kaltwassers hat,
wobei die Schutzeinrichtung (14) stromlos und dazu eingerichtet ist, den Kaltwasserzulauf (8) bei einer Leckage des Leitungssystems abzusperren, wobei Leckagewasser einen Schließvorgang zum selbsttätigen Absperren des Kaltwasserzulaufs (8) initiiert,
**dadurch gekennzeichnet, dass** die Schutzeinrichtuung eine Leckagewasserleiteinrichtung (22) aufweist, die eine Auffangwanne zum Auffangen sämtlichen Leckagewassers (16) ist, die sich in Einbaulage zumindest seitlich über den Heizblock (2) hinauserstreckt und die eine Senke (64) zum Leiten des Leckagewassers (16) zu einer ventilauslösenden Einrichtung (20) hat.

## Claims

1. Hot water appliance (1), in particular for domestic use, having a line system which has a cold water inflow (8) for the supply of cold water, has a hot water outflow (10) for the extraction of hot water, and has a heating block (2) which is arranged fluidically between the cold water inflow (8) and the hot water outflow and which serves for heating the cold water, wherein the hot water appliance comprises a protection device (14) for shutting off the cold water inflow (8) in the event of leakage of the line system, wherein the protection device (14) is not supplied with current and leakage water initiates a closing process for the automatic shut-off of the cold water inflow (8), **characterized in that** the protection device (14) has a leakage water-guiding device (22), which is a collecting trough for collecting all the leakage water (16), which, in the installation position, extends at least laterally beyond the heating block (2), and which has a sink (64) for guiding the leakage water (16) to a valve-triggering device (20).

2. Hot water appliance according to Patent Claim 1, wherein a leakage water quantity for the initiation is settable.

3. Hot water appliance according to Patent Claim 1 or 2, wherein the protection device (14) has a shut-off valve (18) and the valve-triggering device (20).

4. Hot water appliance according to Patent Claim 3, wherein the valve-triggering device (20) comprises a float (34) in a float chamber (36), which float floats upwards in the event of an ingress of leakage water (16) and interacts with a mechanism (38) for releasing a closure element (24).

5. Hot water appliance according to Patent Claim 4, wherein the float body (34) is preloaded into its rest position via a spring element (42).

6. Hot water appliance according to Patent Claim 4 or 5, wherein the closure element (24) is preloaded into its closed position, and the mechanism (38) comprises a locking pin (52), which is preloaded into its release position and serves for holding the closure element (24) in the open position of the latter, and a lever, which releases the locking pin (52) in the event of the float (34) floating upwards.

7. Hot water appliance according to Patent Claim 4, 5 or 6, wherein, upstream of the float chamber (36), the valve-triggering device (20) has a separation chamber (66) for cleaning the leakage water (16) of solid bodies.

8. Hot water appliance according to Patent Claim 3, wherein the valve-triggering device (20) has an expansion element (74) which, upon contact with the leakage water (16), expands in the direction of a closure element (24) and, in doing so, transfers the latter from its open position into its closed position.

9. Hot water appliance according to Patent Claim 8, wherein the expansion element (74) is received in a receiving space (76) which is sealed off with respect to the external surroundings and which is fluidically connected to the leakage water-guiding device (22) via an opening in which a vapour barrier (80) is arranged.

10. Hot water appliance according to one of the preceding patent claims, wherein a screen for holding back solids is arranged in the cold water between a shut-off cock (12) and the shut-off valve (18).

11. Hot water appliance according to one of the preceding patent claims, wherein the protection device (14) has a securing means for transportation.

12. Protection device (14) for a hot water appliance according to one of the preceding patent claims, said hot water appliance having a line system which has a cold water inflow (8) for the supply of cold water, has a hot water outflow (10) for the extraction of hot water, and has a heating block (2) which is arranged fluidically between the cold water inflow (8) and the hot water outflow and which serves for heating the cold water,
wherein the protection device (14) is not supplied with current and is designed to shut off the cold water inflow (8) in the event of leakage of the line system, wherein leakage water initiates a closing process for the automatic shut-off of the cold water inflow (8),
**characterized in that** the protection device has a leakage water-guiding device (22), which is a collecting trough for collecting all the leakage water (16), which, in the installation position, extends at least laterally beyond the heating block (2), and which has a sink (64) for guiding the leakage water (16) to a valve-triggering device (20) .

## Revendications

1. Chauffe-eau (1), en particulier dans le domaine domestique, comprenant un système de conduite qui présente une alimentation en eau froide (8) pour l'alimentation en eau froide, une sortie d'eau chaude (10) pour prélever de l'eau chaude, et un bloc chauffant (2) pour chauffer l'eau froide, disposé par une technique fluidique entre l'alimentation en eau froide (8) et la sortie d'eau chaude, le chauffe-eau comprenant un dispositif de protection (14) pour bloquer l'alimentation en eau froide (8) dans le cas d'une fuite du système de conduite, le dispositif de protection (14) n'étant pas alimenté en courant et l'eau de fuite amorçant une opération de fermeture pour le blocage automatique de l'alimentation en eau froide (8), **caractérisé en ce que** le dispositif de protection (14) présente un dispositif de guidage d'eau de fuite (22) qui est une cuve de réception pour recueillir toute l'eau de fuite (16), qui s'étend dans la position d'installation au moins latéralement au-delà du bloc chauffant (2) et qui présente un puits (64) pour guider l'eau de fuite (16) jusqu'à un dispositif (20) déclenchant une soupape.

2. Chauffe-eau selon la revendication 1, dans lequel une quantité d'eau de fuite d'amorçage peut être ajustée.

3. Chauffe-eau selon la revendication 1 ou 2, dans lequel le dispositif de protection (14) présente une soupape d'arrêt (18) et le dispositif (20) déclenchant une soupape.

4. Chauffe-eau selon la revendication 3, dans lequel le dispositif (20) déclenchant une soupape comprend un flotteur (34) dans une chambre de flotteur (36) qui, lors de la pénétration d'eau de fuite (16), flotte à la surface et coopère avec un mécanisme (38) pour libérer un élément de fermeture (24).

5. Chauffe-eau selon la revendication 4, dans lequel le corps de flotteur (34) est précontraint dans sa position de repos par un élément de ressort (42).

6. Chauffe-eau selon la revendication 4 ou 5, dans lequel l'élément de fermeture (24) est précontraint dans sa position de fermeture et le mécanisme (38) comprend un boulon d'arrêt (52) précontraint dans sa position de libération pour retenir l'élément de fermeture (24) dans sa position d'ouverture et un levier qui libère le boulon d'arrêt (52) lorsque le flotteur (34) flotte à la surface.

7. Chauffe-eau selon la revendication 4, 5 ou 6, dans lequel le dispositif (20) déclenchant une soupape présente, en amont de la chambre de flotteur (36), une chambre de séparation (66) pour débarrasser l'eau de fuite (16) des matières solides.

8. Chauffe-eau selon la revendication 3, dans lequel le dispositif (20) déclenchant une soupape présente un élément en matériau expansible (74) qui, lors du contact avec l'eau de fuite (16), se dilate dans la direction d'un élément de fermeture (24) et fait ainsi passer celui-ci de sa position d'ouverture à sa position de fermeture.

9. Chauffe-eau selon la revendication 8, dans lequel l'élément en matériau expansible (74) est reçu dans un espace de réception (76) étanchéifié par rapport à l'environnement extérieur, qui est en liaison fluidique avec le dispositif de guidage d'eau de fuite (22) par le biais d'une ouverture dans laquelle est disposée une barrière de vapeur (80) .

10. Chauffe-eau selon l'une quelconque des revendications précédentes, dans lequel un filtre pour retenir les matières solides dans l'eau froide est disposé entre un robinet d'arrêt (12) et la soupape d'arrêt (18).

11. Chauffe-eau selon l'une quelconque des revendications précédentes, dans lequel le dispositif de protection (14) présente une sécurité pour le transport.

12. Dispositif de protection (14) pour un chauffe-eau selon les revendications précédentes, qui présente un système de conduite avec une alimentation en eau froide (8) pour l'alimentation en eau froide, une sortie d'eau chaude (10) pour prélever de l'eau chaude, et un bloc chauffant (2) pour chauffer l'eau froide, disposé par une technique fluidique entre l'alimentation en eau froide (8) et la sortie d'eau chaude,
le dispositif de protection (14) n'étant pas alimenté en courant et étant prévu pour bloquer l'alimentation en eau froide (8) dans le cas d'une fuite du système de conduite, l'eau de fuite amorçant une opération de fermeture pour le blocage automatique de l'alimentation en eau froide (8),
**caractérisé en ce que** le dispositif de protection présente un dispositif de guidage d'eau de fuite (22) qui est une cuve de réception pour recueillir toute l'eau de fuite (16), qui s'étend dans la position d'installation au moins latéralement au-delà du bloc chauffant (2) et qui présente un puits (64) pour guider l'eau de fuite (16) jusqu'à un dispositif (20) déclenchant une soupape.
